# EUROPÄISCHE PATENTSCHRIFT

(11) **EP 1 298 998 B1**
(45) Veröffentlichungstag und Bekanntmachung des Hinweises auf die Patenterteilung: **22.12.2004**
(21) Anmeldenummer: 01953135.9
(22) Anmeldetag: 06.07.2001
(51) Int. Cl.: A01N 59/26

(54) **PRÄPARAT MIT FUNGIZIDER WIRKUNG**
PREPARATION WITH A FUNGICIDAL EFFECT
PREPARATION A EFFET FONGICIDE

(30) Priorität: 13.07.2000 DE 10034103
(43) Veröffentlichungstag der Anmeldung: 09.04.2003
(73) Patentinhaber: Tilco Biochemie GmbH, 23858 Reinfeld (DE)
(72) Erfinder: MONNET, Bernard, 23826 Bark (DE); SCHARAFAT, Iradj, 23843 Travenbrück-Tralau (DE)
(74) Vertreter: Klickow, Hans-Henning, Dr.-Ing.
(86) Internationale Anmeldenummer: PCT/DE2001/002456
(87) Internationale Veröffentlichungsnummer: WO 2002/005650

(56) Entgegenhaltungen:
- WO-A-91/18508
- WO-A-99/06585
- WO-A-99/53761
- US-A- 5 174 805

## Beschreibung

Die Erfindung betrifft ein Präparat mit fungizider Wirkung, das aus mindestens einer ersten Komponente und einer zur ersten Komponente unterschiedlichen zweiten Komponente ausgebildet ist und bei dem die zweite Komponente als eine Verbindung aus der Gruppe der Polyphosphate, der Metaphosphate, der Pyrophosphate, der Phosphite, der Phosphonate, der Polyphosphorsäure, der Salze der Polyphosphorsäure, der phosphorigen Säure sowie der Salze der phosphorigen Säure realisiert ist, sowie bei dem die erste Komponente organische Verbindungen enthält, die mindestens zu einem Teil aus mindestens einer Aminosäure sowie zu einem weiteren Teil aus mindestens einem Algenextrakt aus Laminaria oder Ascophylum bestehen.

Bekannte derartige Präparate werden eingesetzt, um Pilzbefall im Bereich der Nutzpflanzen oder im Bereich der Tierzucht zu bekämpfen. Die bekannten Präparate weisen in der Regel eine relativ spezifische Wirkung auf und es können noch nicht alle Anforderungen an eine optimale Wirksamkeit erfüllt werden.

In der DE-OS 24 53 401 wird beispielsweise bereits eine fungizide Zusammensetzung auf der Basis der phosphorigen Säure oder ihrer Salze beschrieben, aus der sich die generelle fungizide Wirksamkeit von Phosphit ergibt. Es ist jedoch aufgrund dieses Standes der Technik bislang nicht möglich gewesen, eine optimierte Definition der unterschiedlichen Komponenten für das fungizide Präparat zu finden.

Aus der DE-OS 41 42 974 ist es bereits bekannt, fungizide Zusammensetzungen unter Verwendung von Phosphiten zu realisieren. Es werden vier unterschiedliche Phosphit-Sorten definiert, die jeweils spezifische Wirkungen entfalten.

Aus der DE-OS 40 39 875 ist es ebenfalls bereits bekannt, fungizide Mittel unter Verwendung von Phosphiten in fester oder verfestigter Form herzustellen. Das Endprodukt liegt in Form eines wasserlöslichen Granulates vor.

Aus der US-PS 59 25 383 ist es bekannt, fungizide Zusammensetzungen unter Verwendung von Phosphaten herzustellen. Es werden ausschließlich kurzkettige Salze der Phosphorsäure verwendet.

In der PCT-WO 99/53761 wird eine wirkstoffkombination mit einer wirkung gegen Pilze, Bakterien sowie Viren beschrieben. Als Wirkstoff wird die Kombination von phosphorhaltigen Substanzen und Substanzen auf der Basis von Algen beschrieben.

Aus der PCT-WO 99/06585 ist es bekannt, zur Verwendung als Fischfutter ein Präparat einzusetzen, das Algenanteile sowie phosphorhaltige Substanzen aufweist. Darüber hinaus können Aminosäuren zugesetzt werden.

Aus der US-A 5,174,805 ist ein Düngemittel bekannt, das Phosphorverbindungen sowie organische Säuren enthält und dem als Bindemittel eine aus Algen gewonnene Substanz zugesetzt wird.

In der PCT-WO 91/18508 werden Pflanzenschutzmittel beschrieben, die Fettsäuren enthalten und mit phosphorhaltigen Bestandteilen versehen sind.

Aufgabe der vorliegenden Erfindung ist es, ein Präparat der einleitend genannten Art derart anzugeben, daß bei einer Vielzahl von Anwendungen eine optimierte Wirksamkeit bereitgestellt wird.

Diese Aufgabe wird erfindungsgemäß dadurch gelöst, daß eine Verwendung als Pflanzenschutzmittel, Anstrichfarbe und/oder Dichtungsmittel vorgesehen ist und daß in der organischen Komponente als Algenmaterial Laminaria oder Ascophylum ssp enthalten ist.

Die obige Komponentenkombination kann zusätzlich mit anderen bekannten und in der Praxis angewandten Fungiziden gemischt werden, um eine breitere und/oder eine längere Wirkung zu erzielen. Unter Polyphosphorsäure wird beispielsweise die Diphosphorsäure verstanden, die auch Pyrophosphorsäure genannt wird.

Das Präparat kann als flüssiges Mittel zum Spritzen, Sprühen oder Gießen formuliert werden. Das Präparat kann darüber hinaus auch als eine Paste zum Streichen sowie als feste Formulierung zum Streuen realisiert sein. In Abhängigkeit vom jeweils zu behandelnden Pflanzentyp kann die Wirkung durch den Zusatz von Netzmitteln oder Haftmitteln verbessert werden.

Als Beispiel sind etwa folgende Verbindungen und Salze zu erwähnen:

Als eine Komponente des Präparates können flüssige und feste natürliche oder synthetische organische oder anorganische Verbindungen und Mischungen, die eine Stärkung der Pflanzen und eine erhöhte natürliche Resistenz gegen Pilzkrankheiten und/oder andere Mikroorganismen hervorrufen und/oder Ertragsteigerung wie mehr Ertrag, bessere Qualität oder mehr Zucker bewirken, verwendet werden.

Verwendbar sind beispielsweise:
a.) Algenmaterialien wie zum Beispiel frische Algen oder Algenteile, Algenmehle aus verschiedenen Arten und verschiedener Herkunft, insbesondere aus Laminaria und Ascophylum ssp, in Rohform oder verarbeitet.
b.) Algenextrakte in aller möglichen Präsentationen wie Blattdünger, Wurzeldünger, Wachstumsförderer; Bodendünger etc.
c.) Alginate-, Pectinate- und andere Polysaccharidesalze wie Na, Ca, K, Cu, Mg, Mn, Fe, NH₄, usw.
d.) Aminosäure einzeln oder in Mischungen, aus tierischer oder pflanzlicher Herkunft.
e.) Zucker und Polysaccharide wie Melasse oder zuckerhaltige Extrakte.
f.) Produkte aus Pflanzenmaterial, Sud, Brei, Extrakte etc.
g.) Organische und anorganische Materialien wie Wirtschaftsdünger, Komposte, organische und anorganische Dünger, Spurenelemente, Bodenverbesserer, Strukturverbesserer, Tonmineralien, Sande, Silizium, Kolloidbildner, slow-release Formulierungshilfsstoffe, synthetische organische und anorganische Substanzen sowie Erden.
h.) Torf, Humus und Huminsäure aus Braun- oder Steinkohle.

Als zweite Komponente können phoshorige Säure und ihre organischen und anorganischen Salze sowie Polyphosphate, Metaphosphate sowie Pyrophosphate, die eine Düngerwirkung und eine Wirkung gegen Mikroorganismen aufweisen, verwendet werden.

Verwendbar sind beispielsweise:
a.) Phosphorige Säure H₃PO₃
b.) Mononatriumphosphit NaH₂PO₃ und Dinatriumphosphit Na₂HPO₃
c.) Monokaliumphosphit KH₂PO₃ und Dikaliumphosphit KH₂PO₃
d.) Saures Ammoniumphosphit
e.) Saures Phosphit des Triäthylamins
f.) Saures Phosphit des Monoäthanolamins H₂PO₃- H₃NCH₂-CH₂ - OH
g.) Primäres Calciumphosphit Ca(H₂PO₃)2*H₂O
h.) Sekundäres Calciumphosphit CaHPO₃*H₂O
i.) Primäres Bariumphosphit BaH₂(PO₃ H)2
j.) Sekundäres Bariumphosphit BaHPO₃
k.) Kupferphosphit Cu₂HPO₃*2H₂O
l.) Sekundäres Kupfer-Phosphit CuHPO₃*2H₂O
m.) Sekundäres Nickel-Phosphit NiHPO₃
n.) Eisen-Phosphit Fe₂(HPO₃)3
o.) Manganphosphit MnHPO₃*H₂O
p.) Sekundäres Zinkphosphit ZnHPO₃
q.) Sekundäres Magnesiumphosphit MgHPO₃*6H₂O
r.) Sekundäres Aluminiumphosphit Al₂(HPO₃)3
s.) Saures Phosphit des Imidazols
t.) Phosphite organischer Basen (Cycloexamin, Anilin, Morpholin)
u.) Saures Calciumpyrophosphat, CaH₂P₃O₇
v.) Tetrakaliumpyrophosphat, K₄P₃O₇
w.) Kaliumtripolyphosphat, K₅P₃O₁₀
x.) Kaliumpolyphosphat, (KPO₃)n
y.) Aluminiummetaphosphat, (Al(PO₃)₃)n

Die Wirksamkeit ergibt sich aus den nachfolgend erläuterten Versuchen.

In den beigefügten Tabellen sind charakteristische Daten zu den nachfolgenden Beispielen zusammengefaßt. Es zeigen im Einzelnen:
- Tabelle 1: Ergebnisse der Prüfung von Fungiziden gegen Venturia-Arten an Kernobst 1992,
- Tabelle 1a: Ergebnisse der Prüfung von Pflanzenstärkungsmitteln gegen Venturia-Arten an Kernobst 1991,
- Tabelle 2: Ergebnisse des Lethamtest von Actilex 1987 (Pflanzen Wachstumsförderung),
- Tabelle 2a: Ergebnisse des Alterungstest von Actilex auf Kresse 1987 (Pflanzen Wachstumsförderung),
- Tabelle 3: Ergebnisse der Prüfung des Pflanzenstärkungsmittels PhytokinAmin in Zuckerrüben,
- Tabelle 4: Ergebnisse der Prüfung eines Pflanzenstärkungsmittels gegen echten und falschen Mehltau in Gurken 1991. Spritzungen mit 400 1/ha Wasser,
- Tabelle 5: Ergebnisse der Prüfung von Pflanzenstärkungsmitteln auf die Kraut- und Braunfäule (Phytophthora infestans) an Tomaten in Freiland,
- Tabelle 6: Wirkung von 5 Präparaten der Fa. Tilco auf das Mycelwachstum von 10 Pilzen in vitro,
- Tabelle 7: Gewächshausversuch gegen Phytophtora infestans an Kartoffeln,
- Tabelle 7a: zweiter Gewächshausversuch gegen Phytophtora infestans an Kartoffeln;
- Tabelle 8: Gewächshausversuch gegen Plasmopara viticola an Weinreben,
- Tabelle 8a: Zweiter Gewächshausversuch gegen Plamopara viticola an Weinreben,
- Tabelle 9: Ergebnisse der Prüfung von Produkten gegen Peronospora für den ökologischen Weinanbau 1998 und
- Tabelle 10: Ergebnisse der Prüfung von Fungiziden gegen Schorf (Venturia) und Mehltau (Podosphera) an Äpfeln (Sorte ELSTAR).

### Wirkung der ersten Komponente:

**Beispiel 1** : PhytokinAmin gegen Apfelschorf (Venturia inequalis). PhytokinAmin ist ein Produkt der Firma Tilco bestehend aus Algenextrakt, Melasse und Aminosäuren aus Zuckerrübe.

Resultate: Siehe Tabelle 1 und Tabelle 1a. Die Resultate zeigen, daß die mit PhytokinAmin behandelten Parzellen bis 98 % weniger Fruchtschorf aufweisen als die unbehandelten Parzellen.

**Beispiel 2** : Actilex (PhytokinAmin in Frankreich) Kinetin und Chlorophyll bildende Wirkung. Das Ergebnis der Labor-Versuche ist in Tabelle 2 und Tabelle 2a wiedergegeben. Die Resultate zeigen, daß PhytokinAmin eine Cytokinin ähnliche Wirkung hat, das mit 10⁻⁵ Kinetin vergleichbar ist. Die Chlorophyll A Bildung wird um 21 % erhöht, was erhöhte Zuckerbildung hervorruft.

**Beispiel 3** : PhytokinAmin-Wirkung auf Zuckergehalt in Zuckerrüben. Das Ergebnis der Feldversuche ist in Tabelle 3 zusammengefaßt.

**Beispiel 4** : PhytokinAmin-Wirkung gegen echten Mehltau in Gurken. Die Resultate zeigen eine 100 %ige Wirkung, wie dies in Tabelle 4 wiedergegeben ist.

**Beispiel 5:** BioSpray-Wirkung gegen Phytophtora infestans an Tomaten im Freiland. Die Ergebnisse sind in Tabelle 5 zusammengefaßt. Die Resultate zeigen eine 40 %ige Wirkung.

### Wirkung der zweiten Komponente

Die Wirkung von phosphoriger Säure und deren Salze ist bekannt. Das Ergebnis des Versuchs in Tabelle 9 bestätigt die wirkung gegen Peronospora.

### Wirkung der Kombinationsprodukte

### Folgende Kombinationsprodukte wurden getestet:

99010 : 560 g/kg Mono + Di-Kalium Phosphit im Wasser
99012 : 560 g/kg Mono + Di-Kalium Phosphit + 200 g/kg Algenextrakt + 160 g/kg Aminosäure Mischung + 80 g/kg Wasser
99014 : PhytokinAmin
99018 : Wie 99012 + 2 % N in Harnstoff-Form
99019 : Wie 99012 mit einer anderen Form der Algenextraktion

### Aufwandmenge:

Die oben genannten Produkte (außer PhytokinAmin) haben einen Gehalt an Phosphor (P) von 8 bis 15 %. Die wirksame Aufwandmenge für die Anwendung auf Kulturpflanzen variiert zwischen 100 bis 900 g Phosphor pro Hektar, aber empfohlen wird eine Aufwandmenge zwischen 300 bis 600 g/ha. Das entspricht 3 bis 6 Liter des Produktes 99012/ha. Für andere Anwendungen wird eine Konzentration von 0,3 bis 1 % des fertigen Produktes benötigt.

### Resultate:

**Beispiel 6** : Mycelwachstumstest in vitro. Die Resultate ergeben sich aus Tabelle 6.

**Beispiel 7** : Wirkung gegen Kartoffelfäule (phytophtora infestans). Die Resultate ergeben sich aus den Tabellen 7 und 7a.

**Beispiel 8** : Wirkung gegen Plasmopara viticola an jungen Weinstöcken. Die Resultate ergeben sich aus den Tabellen 8 und 8a.

**Beispiel 9** : Wirkung gegen Schorf und Mehltau im Apfelanbau. Die Resultate ergeben sich der Tabelle 10.

**Beispiel 10** : Wirkung gegen Pilze und andere Mikroorganismen in Verarbeitungsanlagen für Tierfutter,

Nahrungsmittelspeichern, bei der Reinigung der Behälter und als Bestandteil des Futters. Die Innenwände einer Anlage für Schweinefütterung mit flüssiger Nahrung war stark mit schwarzen Pilzen befallen. Diese Pilze waren mit üblichen Mitteln nicht zu bekämpfen und bringen eine Gefahr für die Tiere. Das Produkt 99012 wurde mit 0,5 % Konzentration auf die Wände gesprüht und die Wände waren noch 2 Wochen nach der Behandlung pilzfrei.

**Beispiel 11** : wirkung gegen Fußpilz. Eine tägliche Anwendung von 0,5 % Lösung von 99017 als Fußbad hat binnen 10 Tagen die Fußpilzinfektion kuriert.

Zusätzlich wurde auch eine Wirkung gegen endogene schädliche Pilze im Darm erzielt.

Die Resultate der Kombinationsprodukte, Beispiel 7 und 8, zeigen eine synergistische Wirkung der beiden Komponenten PhytokinAmin und Kaliumphosphit.

Die Resultate der Versuche 7a und 8a zeigen, daß nicht nur PhytokinAmin als Kombinationspartner der Gruppe der ersten Komponente, sondern auch andere Kombinationen eine gleich gute Wirkung aufweisen.

Der Schutz von unbehandelten neuen Trieben auf Weinreben und Kartoffeln zeigt, daß die Produkte eine klare systemische Wirkung sowie eine von der Aufwandmenge abhängige lange Wirkung aufweisen. Die systemische Wirkung ist auch über die Wurzelaufnahme bestätigt worden, was eine Anwendung über das Wasser oder den Boden erlaubt.

Die erfindungsgemäßen Verbindungen und Kombinationen erwiesen sich auch gegenüber einer Vielzahl anderer Arten parasitärer Pilze als hochwirksam, beispielsweise gegen Peronospora schleideni, Peronospora brassicae, Bremia lactucae, Phytophtora cactorum, Phytophtora fragaria, Phytophtora infestans, Peronospora tabacini, Peronospora schachtii, andere Phytophtora sp., Fusarium sp., Pythium sp., Rhizoctonia sp., Botrylis cinerea, Colletotrichum sp., Venturia sp., Podosphera sp., Sphaerothea sp.

Die erfindungsgemäßen Verbindungen und Kombinationen können allein oder mit anderen bekannten und in der Praxis angewandten Fungiziden gemischt werden, um eine breitere und/oder eine längere wirkung zu erzielen. Die Kombination mit kupferhaltigen Produkten ist besonders zu erwähnen, weil sehr positive Resultate erzielt worden sind.

Insbesondere zeigen die Resultate, daß die Kupferaufwandmenge pro Anwendung sehr stark reduziert werden kann bei gleicher Wirksamkeit. Vorteil ist eine Verringerung der Umweltbelastung, insbesondere der Bodenbelastung mit Kupfer.

Die Produkte können als flüssiges Mittel zum Spritzen, Sprühen oder Gießen formuliert werden. Sie können auch als Paste zum Streichen sowie als feste Formulierung zum Streuen verwendet werden. Sie können darüber hinaus auch mit Hilfsmitteln formuliert werden, die einen sogenannten Slow-release Effekt bewirken. Je nach Pflanzentyp kann die Wirkung durch Zusatz von Netzmitteln, Haftmitteln etc. verbessert werden.

Im Hinblick auf die erste Komponente des Präparates erweisen sich zum Spritzen, Gießen oder Tauchen insbesondere Mischungen aus Algenprodukten in flüssiger Form mit Aminosäuren aus Pflanzen als vorteilhaft. Die Verwendung von Melasse sowie der Einsatz von Düngern und Spurenelementen ist ebenfalls vorteilhaft.

Im Hinblick auf eine Streufähigkeit des Präparates erweisen sich insbesondere vorteilhaft Mischungen aus granulierten Algenprodukten. Darüber hinaus ist die Verwendung von Tonmineralien, Düngern, beziehungsweise von Spurenelementen oder von organischem Material als erfolgversprechend. Bei der Verwendung des organischen Materials ist insbesondere an Humus, Huminstoffe, Komposte sowie Rindenmulch gedacht.

Bei einer Verwendung von Salzen der phosphorigen Säure als zweite Komponente des Präparates kann über die jeweilige chemische Zusammensetzung des Salzes die Löslichkeit sowie die Wirkungsschnelligkeit beeinflußt werden. Eine kurzfristige Wirkung wird beispielsweise durch einen Einsatz von Natrium, Kalium, Ammonium oder Aminsalzen unterstützt. Eine mittlere Wirkungsschnelligkeit kann durch die Verwendung von Magnesium, Calcium oder Barium erreicht werden. Zur Erreichung einer Langzeitwirkung ist der Einsatz von Kupfer, Eisen, Mangan, Zink oder Aluminium vorteilhaft.

Bei einer Verwendung als Spritzmittel, Gießmittel oder Tauchmittel für eine Behandlung von Pflanzen sowie im Hinblick auf eine schnelle Pilzbekämpfung erweist sich der Einsatz von Pyrophosphaten sowie schnellwirkenden Salzen als vorteilhaft. Bei Anwendungen im Bodenbereich oder zur Erzielung von Langzeitwirkungen ist der Einsatz von langsamwirkenden Salzen vorteilhaft. Eine Langzeitwirkung kann beispielsweise bei einem Einsatz im Zusammenhang mit Anstrichfarben oder Dichtungsmitteln zweckmäßig sein.

Im Hinblick auf die Zusammensetzung des Präparates soll noch einmal darauf hingewiesen werden, daß insbesondere ein Zusatz von Polysachariden zu einer Erhöhung der Wirksamkeit führt. Darüber hinaus ist insbesondere die Verwendung von Phosphiten besonders vorteilhaft. Die verwendeten Aminosäuren sind besonders im Hinblick auf eine flüssige Formulierung des Präparates von Bedeutung. Generell können sowohl pflanzliche als auch tierische Aminosäuren verwendet werden.

Die Verwendung von Algenmaterialien entfaltet besondere Bedeutung im Zusammenhang mit einer festen Formulierung des Präparates. Die Verwendung von Algenmaterialien erweist sich gegenüber einer Verwendung von technischen Alginaten als vorteilhaft, da andere Herstellungsverfahren zur Anwendung kommen, die bei der Herstellung von Algenprodukten weniger chemisch aggressiv als bei der Herstellung von Alginaten sind. Die natürlichen Produkteigenschaften werden hierdurch weniger beeinträchtigt.

**Tabelle 1**

| Ergebnisse der Prüfung von Fungizide gegen Venturia-Arten an Kernobst 1992 Staatlicher Versuchsbetrieb Reute- Unterhof , Überlingen Apfel, Golden Delicious, 19 jährig, Dichtpflanzung | | | | | | |
|---|---|---|---|---|---|---|
| Ergebnisse: | | | | | | |

| Anzahl Behandlungen | Spritzfolgen | Konzentration % | Blattbefall in % | | Befall in % bei Früchten | Fruchtberostung |
|---|---|---|---|---|---|---|
| | Beginn und Ende Der Behandlung | | 1.6.92 300 Blätter je Parz. | 20.792 20 Triebe Je Parz. | | |
| ------ | 1)Durchgehend unbehandelt | - | 61,3 | 92,5 | 100 | 2,14 |
| 5 | 2)PhytokinAmin 2.4-12.5 | 0,1 | | | | |
| 8 | Delan SC 750 26.5-21.7 | 0,05 | 74,7 | 28,3 | 40.0 | 2.00 |
| 2 | Euparen 10.8- 31.8 | 0,15 | | | | |
| 10 | 3)Delan SC750 2.4-26.6 | 0,05 | | | | |
| 5 | PhytokinAmin 2.7-31.8 | 0,1 | 3.0 | 1,0 | 0,3 | 2,51 |
| 10 | 4) Delan 5C750 2.4- 26.6 ab 26.6 unbehandelt | 0,05 | 22,7 | 6,0 | 2,0 | Nicht bonitiert |
| Zusammenfassung | | | | | | |
| Schorfwirkung : PhytokinAmin nicht befriedigend im Vergleich zu Spritzfolge mit Delan im Frühjahr ( Parzelle 2 versus 3). Jedoch stark schorfmindernde Wirkung im Sommer bei geringeren Befallsdruck ( Parzelle 3 versus 4) | | | | | | |

**Tabelle 1a**

| Ergebnisse der Prüfung von Pflanzenstärkungsmittel gegen Venturia-Arten an Kernobst 1991 Staatlicher Versuchsbetrieb Reutehöfe, Überlingen Apfel, Golden Delicious, 18 jährig, Dichtpflanzung, Parzellengröße 237 m2, 50 Bäume | | | | | |
|---|---|---|---|---|---|
| Ergebnisse: | | | | | |

| Anzahl Behandlungen | Spritzfolgen | Konzentration % | Blattbefall in % 24.7.91 | Befall in % bei Früchten | Frucht-Berostung nicht gemessen |
|---|---|---|---|---|---|
| | Beginn und Ende Der Behandlung | 1500 l/ha | | | |
| ---------- | 1)Durchgehend unbehandelt | --- | 74,5 | 100 | --- |
| 6 | 2) Delan SC 750 25.3- 23.5 | 0,05 | 2,55 | 2,60 | --- |
| 9 | Ulmasud 4.6-17.9 | 1,50 | | | |
| 6 | 3)Delan SC750 25.3-23. 5 | 0,05 | | | |
| 9 | Neudovital 4.6-17.9 | 1.00 | 1,03 | 10,60 | - |
| 5 | 4)Delan SC750 25.3- 23.5 | 0,05 | | | |
| 9 | PhytokinAmin 4.6-17.9 | 0,1 | 3,38 | 3,10 | --- |
| 6 | 5) Delan SC 750 25.3- 23.5 | 0,05 | 25,6 | 54.0 | --- |
| 10 | 6) Delan SC 750 25.3 27.6 | 0,05 | 1,6 | 1,3 | --- |
| 15 | 7) Delan SC 750 25.3- 17.9 | 0,05 | 0,40 | 0,20 | --- |
| Zusammenfassung | | | | | |
| Schorfwirkung : Die 9x PhytokinAmin Behandlungen nach 5x mit Delan haben eine sehr starke Reduzierung des Schorfbefalles im Vergleich mit 6x Delan im Frühjahr ( Parzelle 4 versus 5 ). Auch im Vergleich mit Delan allein (Parz. 6&7) ist 4 relativ gut. | | | | | |

**Tabelle 2**

| Ergebnisse der Letham Test von Actilex 1987. (Pflanzen Wachstumsförderung) Station de Phytopathologie Gembloux, Belgien Radischen Kotyledone. Actilex ist ein französische Name für PhytokinAmin/ Biospray | | |
|---|---|---|
| Ergebnisse: | | |

| Produkt im Nährboden | Gewichtzunahme in % | % versus Kontrole |
|---|---|---|
| Unbehandelt | 437 | 100 |
| Actilex 10% | 609 | 139 |
| 1% | 538 | 123 |
| Kinetine 10⁻⁵ | 559 | 128 |
| 10⁻⁶ | 471 | 108 |
| Referenzprodukt 50% | 629 | 144 |
| Zusammenfassung: | | |
| Der dritte Letham test bestätig frühere Resultate. Das Produkt bewirkt eine Gewichtzunahme von bis 40%. Die cytokinine Aktivität von Actilex entspricht ungefähr 5. 10⁻⁵ mol von Kinetine. | | |

**Tabelle 2a**

| Ergebnisse der Alterung Test von Actilex auf Kressel 987. (Pflanzen Wachstumsförderung) Station de Phytopathologie Gembloux, Belgien Actilex ist ein französische Name für PhytokinAmin/ Biospray. | | | | | |
|---|---|---|---|---|---|
| Ergebnisse | | | | | |

| Produkt | Chlorophyll a | % unbehandelt | Chlorophyll b | % unbehandelt | Chlorphyll a/b |
|---|---|---|---|---|---|
| Unbehandelt | 21,7 | 100 | 8,2 | 100 | 2,66 |
| Actilex 1% | 22,7 | 104 | 5,7 | 70 | 4,08 |
| 0,1 | 26,6 | 121 | 6,8 | 83 | 3,94 |
| 0,01 | 24,7 | 114 | 6,0 | 74 | 4,10 |
| 0,001 | 22,3 | 103 | 5,0 | 61 | 4,04 |
| 0,0001 | 23,1 | 106 | 6,6 | 81 | 3,50 |
| Gibberelin GA3 | | | | | |
| 10⁻⁵ | 22,1 | 102 | 5,6 | 69 | 3,93 |
| 10⁻⁶ | 23,0 | 106 | 6,3 | 76 | 3,69 |
| 10⁻⁷ | 26,6 | 122 | 7,3 | 89 | 3,67 |
| Indolaceticacid | | | | | |
| IAA 10⁻⁷ | 25,2 | 116 | 6,6 | 81 | 3,82 |
| 10⁻⁸ | 26,7 | 123 | 7,4 | 91 | 3,6β |
| Kinetin 10⁻⁵ | 22,8 | 105 | 7,5 | 92 | 3,07 |
| 10⁻⁶ | 23,7 | 109 | 6,1 | 75 | 4,03 |
| 10⁻⁷ | 22,1 | 102 | 5,6 | 69 | 3,96 |
| Zeatin | 19.0 | 87 | 4,87 | 60 | 3,91 |
| Zusammenfassung: | | | | | |
| Gibberelin GA3 mit 10⁻⁷ M und IAA mit 10⁻⁸ M ergeben ähnliche Resultate wie Actilex 0,1%. Die Versuche von Gembloux zeigen dass Actilex Wachstumshormone des Typus Cytokinine enthält. Die Förderung des Chlorophyll a begünstigt die Zuckerproduktion in der Pflanze. | | | | | |

**Tabelle 3**

| Ergebnisse der Prüfung von Pflanzenstärkungsmittel PhytokinAmin in Zuckerrüben | | | |
|---|---|---|---|
| Tilco Biochemie GmbH. 7 Versuche mit 4 Wiederholungen. | | | |
| Analysiert wurde Zuckergehalt und Ertrag im Vergleich zu unbehandelt. | | | |
| Es wurde immer nur zwei Behandlungen in Kombination mit üblichen | | | |
| Pflanzenschutzmassnahmen durchgeführt. | | | |
| Ergebnisse: | | | |

| Versuchsnummer | Zuckergehalt % von unbehandelt | Gewichtertrag % von unbehandelt | Zuckermenge / Versuch % von unbehandelt |
|---|---|---|---|
| Z 1 | 98,8 | 101,8 | 100,57 |
| Z 2 | 104,5 | 97 | 101,36 |
| Z 3-1 | 105,8 | 111,5 | 117,96 |
| Z 3-2 | 101,9 | 102,2 | 104,14 |
| Z 4 | 100,6 | 100,9 | 101,5 |
| Z 5-1 | 103,2 | 97,8 | 100,9 |
| Z 5-2 | 97,6 | 107 | 104.4 |
| Zusammenfassung | | | |
| Durchschnitt Zuckergehalt der 7 Versuche ist 101,8 % höher als die Kontrolle. Bei der Zuckermenge sind es 104,4 %. | | | |

**Tabelle 4**

| Ergebnisse der Prüfung von Pflanzenstärkungsmittel gegen echter und falscher Mehltau in Gurken 1991. Spritzungen mit 4001/ha Wasser Staatlicher Versuchsbetrieb Kornwestheim | | | | | |
|---|---|---|---|---|---|
| Ergebnisse: | | | | | |

| Anzahl Behandlungen | Spritzfolgen | Konzentration % | Befall in % | | Phytotoxizität |
|---|---|---|---|---|---|
| | | | Echter Mehltau | Falscher Mehltau | |
| ------- | 1)Durchgehend unbehandelt | --- | 20,00 | 0.0 | 0 |
| 6 | 2) Neudovital | 2 | 0,0 | 0,0 | 0 |
| 3 | 3) PhytokinAmin | 0,4 | 0.0 | 0,0 | 0 |
| Zusammenfassung | | | | | |
| Bei geringem Infektionsdruck waren 3 Behandlungen mit PhytokinAmin genügend um den Mehltau vollständig zu stoppen. | | | | | |

**Tabelle 5**

| |
|---|
| Ergebnisse der Prüfung von Pflanzenstärkungsmitteln auf die Kraut- und Braunfäule ( Phytophthora infestans) an Tomaten in Freiland |
| Pflanzenschutzamt Berlin. Publikation: Taspo Magazin 2.2000 |
| BioSpray is gleich PhytokinAmin, oder Bioschutz oder Actilex. Es sind nur verschiedene Marketingnamen der Firma Tilco Biochemie GmbH. |
| Ergebnisse: Integrierter Pflanzenschutz |
| Stärkungsmittel im Test |
| Zitat: "Die Pflanzenstärkungsmittel Neudovital, Milsana Tee, BioSpray, Beinwell-Pflanzenstärkungsmittel, Biocos, Bion, Biofa Pilzvorsorge, Phytovital und Biplantol reduzieren nach mehrfachen Behandlungen den Befall an echtem Mehltau um 40 bis 70 % |

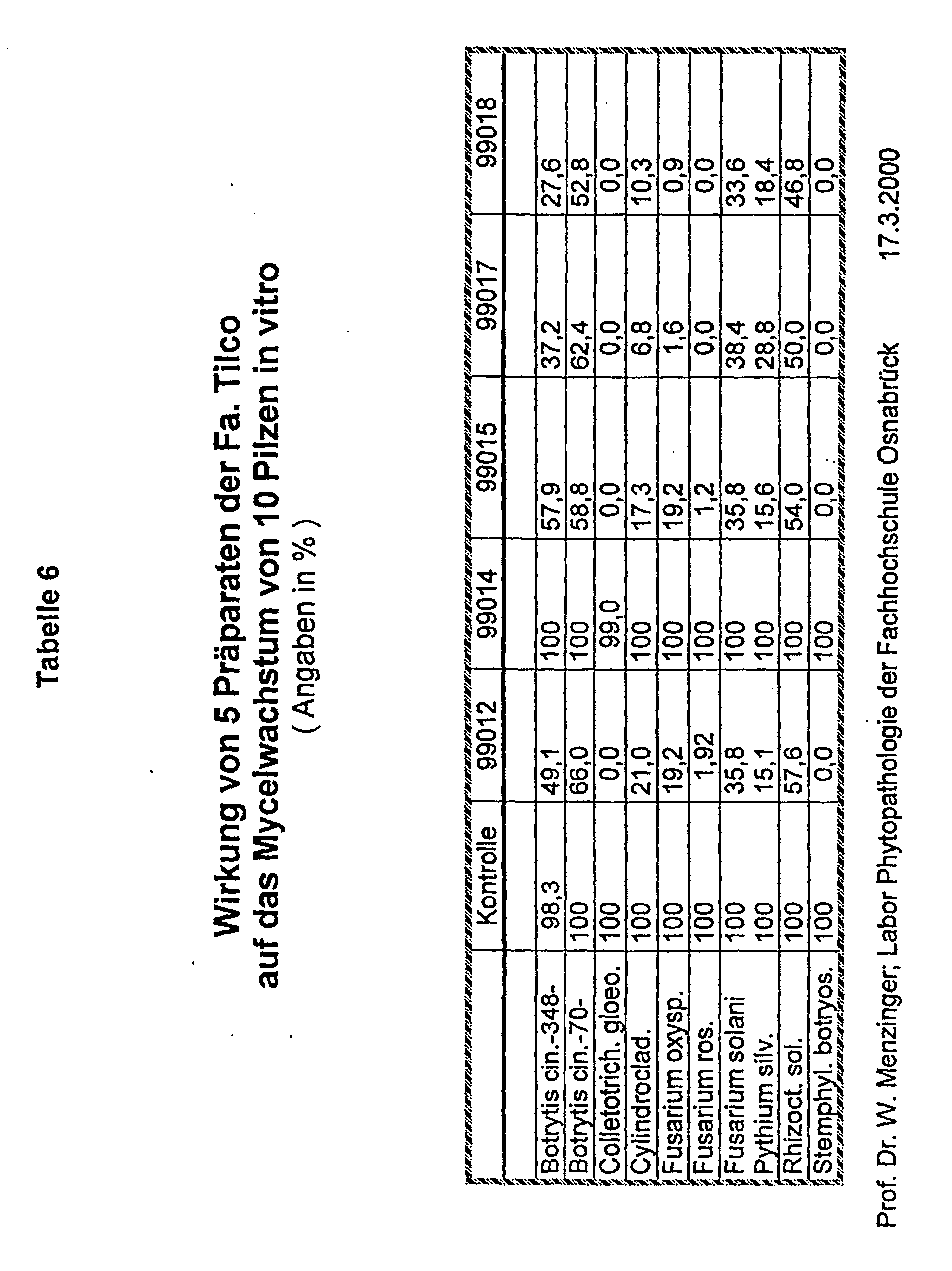

**Tabelle 7**

| **Kartoffeln** | | | | |
|---|---|---|---|---|
| **Gewächshausversuch gegen Phytophtora infestans** | | | | |
| **Versuch G00PH106.BO1** | **Ort CVS** | **Anlage Datum 26.01.00** | **Bonitur** | **Datum** |
| | | | **31.01.00** | **2.02.00** |
| **Mittel** | **Dosis 1 / kg / ha** | | **PHYT.INF.** | |
| | | | **% Infektion** | |
| **KONTROLLE** | **0** | | **100.00** | **100.00** |
| | | | | |
| **DITHANE Ultra** | **1.5** | | **30.00** | **58.75** |
| | | | | |
| **6180FSC230** | **2.8** | | **87.50** | **98.75** |
| **T99010+CIT** | **6+125** | | **45,50** | **72.00** |
| **T99010+CIT** | **9+125** | | **32.25** | **56.00** |
| **T99011+CIT** | **6+125** | | **30.00** | **60.00** |
| **T99011+CIT** | **9+125** | | **17.50** | **38.75** |
| **T99012+CIT** | **6+125** | | **22.50** | **58.75** |
| **T99012+CIT** | **9+125** | | **16.75** | **41.25** |
| **T99014+CIT** | **6+125** | | **98.75** | **100.00** |
| **T99014+CIT** | **9+125** | | **95.00** | **100.00** |
| **T99015+CIT** | **6+125** | | **31.25** | **58.75** |
| **T99015+CIT** | **9+125** | | **23.75** | **40.00** |
| **T99017+CIT** | **6+125** | | **37.50** | **67.50** |
| **T99017+CIT** | **9+125** | | **23.75** | **45.00** |

**Tabelle 7a**

| **Kartoffeln Nr 2** | | | | |
|---|---|---|---|---|
| **Gewächshausversuch gegen Phytophtora infestans** | | | | |
| **Versuch** | **Ort** | **Anlage Datum** | **Bonitur Datum** | |
| **G00PH117** | **CVS** | **01.03.00** | **06.03.00** | **07.03.00** |
| **Mittel** | **Dosis 1 kg / ha** | | **PHYT.INF.** | |
| | | | **% Infektion** | |
| **KONTROLLE** | **0** | | **90.00** | **96.67** |
| | | | | |
| **DITHANE Ultra** | **1.5** | | **0.50** | **1.67** |
| | | | | |
| **T99018+CIT** | **2+125** | | **21.67** | **48.00** |
| **T99018+CIT** | **3+125** | | **17.00** | **30.00** |
| **T99018+CIT** | **4,5+125** | | **1633** | **23.83** |
| **T99018+CIT** | **6+125** | | **11.67** | **19,17** |
| **T99012+CIT** | **2+125** | | **35.00** | **55.00** |
| **T99012+CIT** | **3+125** | | **17.50** | **26.33** |
| **T99012+CIT** | **4,5+125** | | **20.00** | **31.67** |
| **T99012+CIT** | **6+125** | | **10.17** | **14.67** |
| **T99019+CIT** | **2+125** | | **26.67** | **51.67** |
| **T99019+CIT** | **3+125** | | **18.33** | **35.00** |
| **T99019+CIT** | **4,5+125** | | **11.33** | **17.50** |
| **T99019+CIT** | **6+125** | | **7.17** | **11.67** |

**Tabelle 8**

| **Weinreben Nr 1** | | | | | |
|---|---|---|---|---|---|
| **Gewächshausversuch gegen Plasmopara viticola** | | | | | |
| **Versuch** | **Ort Anlage Datum** | **Bonitur Datum** | | | |
| **G00PLV05.BO1** | **CVS 25.01.00** | **31.01.00** | **2.02.00** | **7.02.00** | **10.02.00** |
| **Mittel** | **Dosis g/hl** | **Plasmopara % Infektion** | | | |
| | | **Auf behand. Triebe** | | **auf neue Triebe** | |
| **CONTROLLE** | **0** | **53.75** | **76.25** | **48,75** | **66.25** |
| **Dithane Ultra** | **150 g/hl** | **0.00** | **0.50** | **30.00** | **33.75** |
| **6180FSC230** | **2,800** | **0.00** | **5.00** | **28.75** | **40.00** |
| **T99010+CIT** | **1,800+25** | **10.50** | **31.25** | **38.75** | **51.25** |
| **T99011+CIT** | **1,800+25** | **0.00** | **0.50** | **0.00** | **0.00** |
| **T99012+CIT** | **1,800+25** | **0.00** | **0.00** | **0.00** | **0.00** |
| **T99014 +CIT** | **1,800+25** | **21.00** | **31.25** | **37.50** | **45.00** |
| **T99015+CIT** | **1,800+25** | **0.00** | **0.25** | **0.00** | **0.00** |
| **T99017+CIT** | **1,800+25** | **0.00** | **1.00** | **0.00** | **0.00** |
| **Erste künstliche Infektion am 25.01.00** | | | | | |
| **Zweite künstliche Infektion am 01.02.00** | | | | | |

**Tabelle 8a**

| **Weinreben Nr 2** | | | | | | |
|---|---|---|---|---|---|---|
| **Gewächshausversuch gegen Plasmopara viticola** | | | | | | |
| **Versuch** | **Ort Anlage Datum** | **Bonitur Datum** | | | | |
| **G00PLV15.BO1** | **CVS 01.03.2000** | **08.03** | **13.03** | **20.03** | ***20.03*** | ***28.03*** |
| **Mittel** | **Dosis g/hl** | **Plasmopara vit. % Infection** | | | | |
| | | **Auf behandelte Triebe** | | | ***Auf neue Triebe*** | |
| **KONTROLLE** | **0** | **76,25** | **95.00** | **95.00** | ***40.00*** | ***78.75*** |
| **Dithane Ultra** | **150 g/hl** | **0.00** | **0.00** | **0.25** | ***13.75*** | ***42.50*** |
| **T99018+CIT** | **1,2001+25** | **0.25** | **1.75** | **4.00** | ***0.50*** | ***1.25*** |
| **T99018+CIT** | **600+25** | **0.75** | **8.25** | **13.00** | ***0.00*** | ***9.50*** |
| **T99018+CIT** | **300+25** | **7.00** | **27.50** | **37.50** | ***14.00*** | ***25.00*** |
| **T99012+CIT** | **1,200+25** | **0.25** | **1.00** | **1.75** | ***0.00*** | ***2.00*** |
| **T99012+CIT** | **600+25** | **2.25** | **10.00** | **13.75** | ***3.75*** | ***7.50*** |
| **T99012+CIT** | **300+25** | **5.25** | **17.50** | **21.25** | ***0.50*** | ***14.75*** |
| **T99019+CIT** | **1,200+25** | **0.00** | **1.25** | **2.00** | ***0.50*** | ***1.50*** |
| **T99019+CIT** | **600+25** | **2.25** | **8.75** | **11.75** | ***6.25*** | ***17.50*** |
| **T99019+CIT** | **300+25** | **8.75** | **25.00** | **31.25** | ***11.25*** | ***22.50*** |
| Erste künstliche Infektion am 01.03.00 | | | | | | |
| Zweite künstliche Infektion am 14.03.00 | | | | | | |

**Tabelle 9**

| Ergebnisse der Prüfung von Produkte gegen Peronospora für den Ökologische Weinanbau 1998 Staatlicher Lehr- und Versuchsanstalt Weinsberg. Internet Bericht Behandlungen 10 x zwischen 19.05 und 12.08 1998 mit 300 bis 800 Liter Wasser / ha Bonitur am 21.9.1998 = 40 Tage nach Abschluss der Behandlungen. | | | | |
|---|---|---|---|---|
| Ergebnisse: | | | | |

| Anzahl Behandlungen | Spritzfolgen | Konzentration % | Blattbefall in % | Traubenbefall in % |
|---|---|---|---|---|
| ------ | 1)Durchgehend unbehandelt | --- | 97 | 52 |
| 10 | 2) Phosphorige Säure | 0,025 | 83 | 52 |
| 10 | 3) Phosphorige Säure | 0,05 | 80 | 42 |
| 10 | 4) Phosphorige Säure | 0,1 | 62 | 15 |
| 10 | 5) Phosphorige Säure | 0,2 | 40 | 2,0 |
| 10 | 6) Kupfer 450 FW | 0,04 | 70 | 45 |
| 10 | 7) Kupfer 450 FW Salicylsäure | 0,04 0,1 | 68 | 41 |
| 10 | 8) Kupfer 450 FW Salicylsäure | 0,04 0,2 | 68 | 38 |
| 10 | 9) Salicylsäure | 0,2 | 83 | 54 |
| 10 | 10) Salicylsäure MycoSin | 0,2 0,8 | 68 | 34 |
| 10 | 11) Salicylsäure Phosph. Säure | 0,2 0,05 | 78 | 21 |
| Zusammenfassung : Nur Phosphorige Säure mit 0,2% kontrolliert zufriedenstellend die Trauben ( 2 % Befall). Auf die Blätter ( 40% Befall) ist die Wirkung nicht optimal. | | | | |

**Tabelle 10**

| Ergebnisse der Prüfung von Fungizide gegen Schorf (Venturia) und Mehltau (Podosphera) Apfel, Sorte ELSTAR Behandlungen: 12x zwischen 5.04.2000 und 18.07.2000. Wassermenge : bis 1500 Liter/ha Bonitur am 27.07.2000 | | | | | |
|---|---|---|---|---|---|
| Anzahl Behandlungen | Spritzfolgen | Konzentration % | Mehltau % Primär-Infektion | Mehltau % Sekundär-infektion auf Blätter | % Blätter mit Schorffleck |
| ------- | 1)Durchgehend unbehandelt | --- | 81,7 | 71,0 | 83,6 |
| 12 | 2) Tilco 99018 | 6 x 0,4 6x0,2 | 8,3 | 24,4 | 33,1 |
| 12 | 3) Standart Spritzplan | | 14,6 | 31,3 | 34,0 |
| 12 | 4) Versuchsspritzplan | | 3,75 | 2,9 | 15,3 |
| Zusammenfassung: | | | | | |
| Schorfwirkung : Tilco 99018 ist gleichwertig mit Standartspritzplan (3) aber nicht so gut wie der Versuchsspritzplan (4). | | | | | |
| Mehltauwirkung: Tilco 99018 ist besser wie Standartspritzplan (3) aber nicht so gut wie der Versuchsspritzplan (4). | | | | | |

## Patentansprüche

1. Präparat mit fungizider wirkung, das aus mindestens einer ersten Komponente und einer zur ersten Komponente unterschiedlichen zweiten Komponente ausgebildet ist und bei dem die zweite Komponente als eine Verbindung aus der Gruppe der Polyphosphate, der Metaphosphate, der Pyrophosphate, der Phosphite, der Phosphonate, der Polyphosphorsäure, der Salze der Polyphosphorsäure, der phosphorigen Säure sowie der Salze der phosphorigen Säure realisiert ist, sowie bei dem die erste Komponente organische Verbindungen enthält, die mindestens zu einem Teil aus mindestens einer Aminosäure sowie zu einem weiteren Teil aus mindestens einem Algenextrakt bestehen, **dadurch gekennzeichnet, daß** eine Verwendung als Pflanzenschutzmittel, Anstrichfarbe und/oder Dichtungsmittel vorgesehen ist und daß in der organischen Komponente als Algenmaterial Laminaria oder Ascophylum ssp enthalten ist.

2. Präparat nach Anspruch 1, **dadurch gekennzeichnet, daß** die erste Komponente anorganische Verbindungen enthält.

3. Präparat nach Anspruch 1 oder 2, **dadurch gekennzeichnet, daß** die erste Komponente ein Produkt aus Landpflanzen enthält.

4. Präparat nach Anspruch 3, **dadurch gekennzeichnet, daß** ein Produkt aus der Gruppe der Extrakte, Aufschlüsse, Breie, Säfte oder Mehle enthalten ist.

5. Präparat nach einem der Ansprüche 1 bis 4, **dadurch gekennzeichnet, daß** die erste Komponente mindestens ein Polysacharid enthält.

6. Präparat nach Anspruch 5, **dadurch gekennzeichnet, daß** das Polysacharid als ein Produkt aus der Gruppe der Melassen, Pectinate, Zucker sowie Salze realisiert ist.

7. Präparat nach einem der Ansprüche 1 bis 6, **dadurch gekennzeichnet, daß** die erste Komponente einen Humus enthält.

8. Präparat nach Anspruch 7, **dadurch gekennzeichnet, daß** der Humus als ein Produkt aus der Gruppe der Huminstoffe, Komposte, Rindenmulche sowie Holzschnitzel realisiert ist.

9. Präparat nach einem der Ansprüche 1 bis 8, **dadurch gekennzeichnet, daß** die erste Komponente eine synthetische organische Verbindung enthält.

10. Präparat nach einem der Ansprüche 1 bis 9, **dadurch gekennzeichnet, daß** die erste Komponente Bestandteile von Wasserpflanzen enthält.

11. Präparat nach einem der Ansprüche 1 bis 10, **dadurch gekennzeichnet, daß** die erste Komponente Bestandteile von Meereswasserpflanzen enthält.

12. Präparat nach einem der Ansprüche 1 bis 11, **dadurch gekennzeichnet, daß** die erste Komponente Bestandteile von Süßwasserpflanzen enthält.

13. Präparat nach Anspruch 1, **dadurch gekennzeichnet, daß** die erste Komponente ein Produkt aus der Gruppe der Algen, Extrakte, Breie, Mehle, Aufschlüsse und Alginate enthält.

14. Präparat nach Anspruch 1, **dadurch gekennzeichnet, daß** die erste Komponente eine synthetische Verbindung enthält.

15. Präparat nach einem der Ansprüche 1 bis 14, **dadurch gekennzeichnet, daß** die erste Komponente mindestens ein Kolloidprodukt enthält.

16. Präparat nach einem der Ansprüche 1 bis 15, **dadurch gekennzeichnet, daß** die erste Komponente ein Silikateprodukt enthält.

17. Präparat nach einem der Ansprüche 1 bis 16, **dadurch gekennzeichnet, daß** die erste Komponente Erden enthält.

18. Präparat nach einem der Ansprüche 1 bis 17, **dadurch gekennzeichnet, daß** die erste Komponente Tonmineralien enthält.

19. Präparat nach einem der Ansprüche 1 bis 18, **dadurch gekennzeichnet, daß** die erste Komponente Sande enthält.

20. Präparat nach einem der Ansprüche 1 bis 19, **dadurch gekennzeichnet, daß** die erste Komponente mindestens einen Dünger enthält.

21. Präparat nach einem der Ansprüche 1 bis 20, **dadurch gekennzeichnet, daß** die erste Komponente mindestens ein Spurenelement enthält.

## Claims

1. Preparation with fungicidal action which is formed from at least a first component and a second component different form the first component and in which the second component is produced as a compound from the group of polyphosphates, metaphosphates, pyrophosphates, phosphites, phosphonates, polyphosphoric acid, the salts of polyphosphoric acid, phosphoric acid and the salts of phosphoric acid, and in which the first component contains organic compounds, at least one part of which consists of at least one amino acid and another part of which consists of at least one algae extract, **characterised in that** a use is intended as a plant protection agent, paint and/or sealant and that Laminaria or Ascophylum ssp is contained in the organic component as algae material.

2. Preparation according to Claim 1, **characterised in that** the first component contains inorganic compounds.

3. Preparation according to Claim 1 or 2, **characterised in that** the first component contains a product from terrestrial plants.

4. Preparation according to Claim 3, **characterised in that** a product from the group of extracts, pulps, pastes, juices or flours is contained.

5. Preparation according to one of Claims 1 to 4, **characterised in that** the first component contains at least one polysaccharide.

6. Preparation according to Claim 5, **characterised in that** the polysaccharide is produced as a product from the group of molasses, pectinates, sugars and salts.

7. Preparation according to one of Claims 1 to 6, **characterised.in that** the first component contains a humus.

8. Preparation according to Claim 7, **characterised in that** the humus is produced as a product from the group of humic substances, composts, bark mulches and wood chippings.

9. Preparation according to one of Claims 1 to 8, **characterised in that** the first component contains a synthetic organic compound.

10. Preparation according to one of Claims 1 to 9, **characterised in that** the first component contains constituents of aquatic plants.

11. Preparation according to one of Claims 1 to 10, **characterised in that** the first component contains constituents of marine plants.

12. Preparation according to one of Claims 1 to 11, **characterised in that** the first component contains constituents of fresh water plants.

13. Preparation according to Claim 1, **characterised in that** the first component contains a product from the group of algae, extracts, pastes, flours, pulps and alginates.

14. Preparation according to Claim 1, **characterised in that** the first component contains a synthetic compound.

15. Preparation according to one of Claims 1 to 14, **characterised in that** the first component contains at least one colloidal product.

16. Preparation according to one of Claims 1 to 15, **characterised in that** the first component contains a silicate product.

17. Preparation according to one of Claims 1 to 16, **characterised in that** the first component contains soils.

18. Preparation according to one of Claims 1 to 17, **characterised in that** the first component contains clay minerals.

19. Preparation according to one of Claims 1 to 18, **characterised in that** the first component contains sands.

20. Preparation according to one of Claims 1 to 19, **characterised in that** the first component contains at least one fertiliser.

21. Preparation according to one of Claims 1 to 20, **characterised in that** the first component contains at least one trace element.

## Revendications

1. Préparation à effet fongicide qui comprend au moins un premier composant et un deuxième composant qui diffère du premier composant, et dans laquelle le deuxième composant est réalisé sous la forme d'une combinaison appartenant au groupe des polyphosphates, des métaphosphates, des pyrophosphates, des phosphites, des phosphonates, de l'acide polyphosphorique, des sels de l'acide polyphosphorique, de l'acide phosphorique ainsi que des sels des l'acide phosphorique, et dans laquelle le premier composant contient des combinaisons organiques dont une partie au moins consiste au moins en un acide aminé et une autre partie au moins en un extrait d'algues, **caractérisée en ce qu'**il est prévu d'utiliser comme produit phytosanitaire une peinture et / ou un produit d'étanchéité et que le composant organique contient de la laminaire ou de l'ascophylum ssp comme produit alginique.

2. Préparation selon la revendication 1, **caractérisée en ce que** le premier composant contient des combinaisons anorganiques.

3. Préparation selon la revendication 1 ou 2, **caractérisée en ce que** le premier composant contient un produit à base de plantes terrestres.

4. Préparation selon la revendication 3, **caractérisée en ce qu'**elle comprend un produit qui appartient au groupe des extraits, des débris, des pulpes, des jus ou des farines.

5. Préparation selon l'une des revendications 1 à 4, **caractérisée en ce que** le premier composant comprend au moins un polysaccharide.

6. Préparation selon la revendication 5, **caractérisée en ce que** le polysaccharide est réalisé sous la forme d'un produit du groupe des mélasses, des pectinases, des sucres ou des sels.

7. Préparation selon l'une des revendications 1 à 6, **caractérisée en ce que** le premier composant contient un humus.

8. Préparation selon la revendication 7, **caractérisée en ce que** l'humus est réalisé sous la forme d'un produit du groupe des humines, composts, paillis d'écorces, de même que copeaux de bois.

9. Préparation selon l'une des revendications 1 à 8, **caractérisée en ce** quel le premier composant contient une composition organique, synthétique.

10. Préparation selon l'une des revendications 1 à 9, **caractérisée en ce que** le premier composant contient des constituants de plantes aquatiques

11. Préparation selon l'une des revendications 1 à 10, **caractérisée en ce que** le premier composant contient des constituants de plantes marines.

12. Préparation selon l'une des revendications 1 à 11, **caractérisée en ce que** le premier composant contient des constituants de plantes d'eau douce.

13. Préparation selon la revendication 1, **caractérisée en ce que** le premier composant contient un produit du groupe des algues, extraits, pulpes, farines, débris et alginates.

14. Préparation selon la revendication 1, **caractérisée en ce que** le premier composant contient une combinaison synthétique.

15. Préparation selon l'une des revendications 1 à 14, **caractérisée en ce que** le premier composant contient au moins un produit colloïdal.

16. Préparation selon l'une des revendications 1 à 15, **caractérisée en ce que** le premier composant contient un produit aux silicates.

17. Préparation selon l'une des revendications 1 à 16, **caractérisée en ce que** le premier composant contient des terres.

18. Préparation selon l'une des revendications 1 à 17, **caractérisée en ce que** le premier composant contient des minéraux argileux.

19. Préparation selon l'une des revendications 1 à 18, **caractérisée en ce que** le premier composant contient des sables.

20. Préparation selon l'une des revendications 1 à 19, **caractérisée en ce que** le premier composant contient au moins un engrais.

21. Préparation selon l'une des revendications 1 à 20, **caractérisée en ce que** le premier composant contient au moins un oligo-élément.
